# EUROPEAN PATENT SPECIFICATION

(11) **EP 4 645 956 B1**
(45) Date of publication and mention of the grant of the patent: **11.03.2026**
(21) Application number: 24173993.7
(22) Date of filing: 03.05.2024
(51) Int. Cl.: H04W 36/14, H04W 36/16, H04W 48/18, H04W 52/02, H04W 84/06, H04W 88/06

(54) **USING A USER EQUIPMENT IN A NON-TERRESTRIAL MOBILE COMMUNICATION NETWORK**
VERWENDUNG EINES BENUTZERGERÄTS IN EINEM NICHT TERRESTRISCHEN MOBILKOMMUNIKATIONSNETZWERK
UTILISATION D'UN ÉQUIPEMENT UTILISATEUR DANS UN RÉSEAU DE COMMUNICATION MOBILE NON TERRESTRE

(43) Date of publication of application: 05.11.2025
(73) Proprietor: Deutsche Telekom AG, 53113 Bonn (DE)
(72) Inventor: KLATT, Axel, 50999 Köln (DE); UTRAP, Andreas, 53757 Sankt Augustin (DE)
(74) Representative: Schwöbel, Thilo K.

(56) References cited:
- US-A1- 2022 232 463

## Description

### BACKGROUND

The present invention relates to a method for using a user equipment in or with a non-terrestrial mobile communication network and/or to a method that uses a non-terrestrial radio access technology, wherein the user equipment is provided with a priority information regarding the mobile communication network and/or the radio access technology, wherein the user equipment is able to be configured to perform a network selection procedure to select a higher priority mobile communication network and/or to select a higher priority radio access technology.

Furthermore, the present invention relates to a user equipment for being used in or with a non-terrestrial mobile communication network and/or to a user equipment using a non-terrestrial radio access technology, wherein the user equipment is provided with a priority information regarding the mobile communication network and/or the radio access technology, wherein the user equipment is configured to perform a network selection procedure to select a higher priority mobile communication network and/or to select a higher priority radio access technology, the user equipment comprising a subscriber identity module entity having a time interval-related information such that the time interval, to be applied by the user equipment to perform the network selection procedure, depends on the time interval-related information stored in the subscriber identity module entity.

Additionally, the present invention relates to a system or to a mobile communication network for using a user equipment in or with a non-terrestrial mobile communication network and/or that uses a non-terrestrial radio access technology, wherein the user equipment is provided with a priority information regarding the mobile communication network and/or the radio access technology, wherein the user equipment is able to be configured to perform a network selection procedure to select a higher priority mobile communication network and/or to select a higher priority radio access technology.

Furthermore, the present invention relates to a program and to a computer-readable medium for providing communication services to a user equipment using an access network of or associated with a mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network (and, hence, are also called terrestrial networks or TN-networks) are typically organized throughout a country (or a part of or a region within a country) in a - typically geographically repeating - pattern of typically stationary (radio) cells (and associated base station entities) which typically belong to (or are used by or associated or assigned to) a mobile network operator (MNO).

Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space-based network infrastructure include, e.g., mobile satellite connectivity with low earth orbit (LEO) satellites, medium earth orbit (MEO) satellites and/or geostationary earth orbit (GEO) satellites and also so-called high-altitude platforms or high-altitude pseudo-satellites (HAPS). Such non-terrestrial networks, or combined terrestrial and non-terrestrial networks, will allow global cellular (radio) coverage and interworking between terrestrial networks (TN) and the non-terrestrial network(s) (NTN). The main use case for non-terrestrial networks is to fill in radio coverage in areas (like remote regions and oceans) where there is no, or only weak, terrestrial network coverage available. Reference is made to US2022/232463 A1.

Hence, regarding a situation of low (radio) coverage or absence of (radio) coverage (by a terrestrial network), a user equipment which is supportive of non-terrestrial networks would leave the coverage of the terrestrial network, and - based on standardized mobility procedures from PLMN selection (public land mobile network selection), via cell reselection including ePLMNs (equivalent public land mobile networks) to real handover, especially based on terrestrial networks interworking with national roaming or inter-PLMN cross border mobility - the user equipment will eventually end up being connected to or being registered on the non-terrestrial network.

However, once a user equipment is connected to (or registered with or served by) the non-terrestrial network, such a user equipment typically performs periodic network selection attempts, i.e. attempts to search a higher priority network, typically a public land mobile network. These periodic network selection attempts typically involve a so-called "background public land mobile network search" (cf. 3GPP TS 22.011, 3GPP TS 23.122) which is typically able to be controlled by setting (or defining) a parameter (or information) relating to the possible repetition time interval of such a search procedure in the user equipment's universal integrated circuit card or module (or SIM card).

Especially in order to avoid - e.g. for certain user equipments or categories thereof - repeated battery drain related to performing such periodic network selection attempts, such periodic network selection attempts are able to be switched off. However, completely switching off any such periodic network selection attempts might lead to unwanted situations such as these user equipments (or categories thereof) being registered with telecommunications networks (or using access networks or radio access technologies) that are suboptimal and/or that are rather to be avoided, at least in a permanent manner.

### SUMMARY

An object of the present invention is to provide a technically simple, effective and cost-effective solution for providing communication services to a user equipment such that such a user equipment, which is using (or connected to or served by) a non-terrestrial network, is able to switch to a higher priority network in a targeted, or finer-granular, manner, i.e. without necessarily and repeatedly performing periodic network selection attempts (only upon expiry of a timer) in cases of being connected to acceptable telecommunications networks (and/or access networks or radio access technologies) but nevertheless be able to perform periodic network selection attempts in other cases. A further object of the present invention is to provide a corresponding user equipment, system or mobile communication network, and a corresponding program and computer-readable medium.

The object of the present invention is achieved by a method for using a user equipment in or with a non-terrestrial mobile communication network and/or that uses a non-terrestrial radio access technology, wherein the user equipment is provided with a priority information regarding the mobile communication network and/or the radio access technology, wherein - in case that the priority information, regarding the mobile communication network used by the user equipment and/or regarding the radio access technology used by the user equipment, indicates a sufficiently low priority of the mobile communication network used by the user equipment and/or a sufficiently low priority of the radio access technology used by the user equipment - the user equipment is configured to perform a network selection procedure to select a higher priority mobile communication network and/or to select a higher priority radio access technology, wherein the user equipment comprises a subscriber identity module entity realizing the functionality of a subscriber identity module, wherein the subscriber identity module entity comprises a time interval-related information such that the time interval, to be applied by the user equipment to perform the network selection procedure for a higher prioritized mobile communication network and/or for a higher priority radio access technology, depends on the time interval-related information stored in the subscriber identity module entity,
wherein the method comprises the following steps:
-- in a first step, the user equipment uses the non-terrestrial mobile communication network and/or the non-terrestrial radio access technology,
-- in a second step, the user equipment performs the network selection procedure, to select a higher priority mobile communication network and/or to select a higher priority radio access technology, in a manner applying the time interval-related information, wherein the time interval-related information is exclusively applied in case that the user equipment uses
-- the non-terrestrial mobile communication network or a non-terrestrial mobile communication network,
   and/or
-- the non-terrestrial radio access technology or a non-terrestrial radio access technology.

According to the present invention, it is advantageously possible for the user equipment to perform the network selection procedure in a more targeted, or finer-granular, manner; i.e. it is advantageously possible to combine the advantages of performing the network selection procedure less often (or not at all) - and hence save electrical power - in case the user equipment is registered with (or to) a mobile communication network and/or is using an radio access technology that corresponds to an acceptable mobile communication network and/or to an acceptable radio access technology, and nevertheless avoid unwanted situations of a considered user equipment (or a category thereof) being registered with telecommunications networks (or using access networks or radio access technologies) that are suboptimal and/or that are rather to be avoided, at least in a permanent manner.

Especially according to a specifically preferred scenario according to the present invention, it is advantageously possible to (completely) switch off periodic network selection procedures in case that the considered user equipment is connected to a terrestrial network (and/or radio access technology) while avoiding such a complete switch off - through using or applying the time interval-related information stored in the subscriber identity module entity and, thus, performing time interval-based periodic (or repeated) network selection procedures - in case that the considered user equipment is connected to a non-terrestrial network (and/or a non-terrestrial radio access technology).

The information content of the time interval related information especially corresponds to a predetermined number of positive integer values, and the time interval related information that is actually used - to determine the time interval to apply for the periodic network selection procedure - might comprise one or a plurality of pieces of information such as numeric values stored in, and/or transmitted to, the subscriber identity module entity as one or a plurality of bytes.

Additionally, the time interval related information can typically also take an information content indicating that no time interval exists, or otherwise stated, that the time interval is of infinite duration (hence, the time interval related information taking this value corresponds to the network selection procedure being never invoked by a respective user equipment, at least not in a manner based on the time interval related information stored in the subscriber identity module entity). This last-mentioned possibility corresponds to switching off (or completely switching off) the periodic network selection attempts (at least the ones being performed based on the time interval related information stored in the subscriber identity module entity.

Thus, the periodic network selection procedure is normally triggered if both a sufficiently low network (and/or radio access technology) priority (of the presently used network or radio access technology) is established by the user equipment, and a time interval (corresponding to a timer) has elapsed, and, of course, the periodic network selection procedure - applied based on the respective time interval, i.e. the respective timer - is not switched off. The time interval is determined by a time interval-related information stored in an entity realizing the functionality of a subscriber identity module of the user equipment (i.e. in the universal integrated circuit card or module, or SIM card). This means that the user equipment is configured to perform a periodic network selection procedure to select a higher priority mobile communication network and/or to select a higher priority radio access technology in case that:
-- the user equipment is provided with (typically as part of the subscriber identity module entity, i.e. the universal integrated circuit card or module, or SIM card) a priority information regarding the mobile communication network (or, generally regarding mobile communication networks) and/or the radio access technology (or, generally regarding radio access technologies), and
-- the priority information, regarding the mobile communication network used by the user equipment and/or regarding the radio access technology used by the user equipment, indicates a sufficiently low priority of the mobile communication network currently used by the user equipment and/or a sufficiently low priority of the radio access technology currently used by the user equipment (i.e., typically, not the home network (home public land mobile network) of the considered user equipment and neither an equivalent network (equivalent public land mobile network)), and
-- the time interval (being determined by a time interval related information stored in the subscriber identity module entity of the user equipment) has elapsed - and, of course, in case that such (timer-based, i.e. periodic) network selection procedure is not switched off (by means of the time interval related information having a corresponding value).

According to the presently standardized approach, the possibility exists of completely switching off the periodic network selection attempts (by means of the time interval-related information, stored in the subscriber identity module entity, having a corresponding content or value). However, this might lead to the above-mentioned negative consequences or situations. The present invention thus advantageously allows for a more targeted approach by means of providing the possibility to switch off the periodic network selection attempts for certain situations while allowing them (i.e. not switching them off) for other situations. It is, thus, advantageously possible, according to the present invention that a higher degree of flexibility is possible to achieve with regard to applying or not applying (i.e. switching off) the time interval a user equipment is applying in respect of a possible (periodic) network selection procedure.

This is made possible, according to the present invention, by means of, in a first step, the user equipment using the non-terrestrial mobile communication network and/or the non-terrestrial radio access technology, and, in a second step, the user equipment performing the (periodic) network selection procedure (i.e. to select a higher priority mobile communication network and/or to select a higher priority radio access technology) in a manner applying the time interval-related information, and the time interval-related information is exclusively applied in case that the considered user equipment uses a non-terrestrial network, i.e. the considered user equipment uses:
-- the non-terrestrial mobile communication network (or another non-terrestrial mobile communication network),
   and/or
-- the non-terrestrial radio access technology (or another non-terrestrial radio access technology).

According to a preferred embodiment of the present invention, the subscriber identity module entity comprises a further time interval-related information such that the time interval, to be applied by the user equipment to perform the network selection procedure for a higher prioritized mobile communication network and/or for a higher priority radio access technology in case that the user equipment uses a terrestrial mobile communication network and/or a terrestrial radio access technology, depends on the further time interval-related information stored in the subscriber identity module entity.

Thereby, it is advantageously possible according to the present invention to use or to operate the (considered) user equipment in a manner such as to be configured to apply a more targeted, or finer-granular, manner when it comes to conducting periodic, i.e. time interval-related, network selection procedures: By means of using the time interval-related information stored in the subscriber identity module entity (which is exclusively applied in case that the considered user equipment uses a non-terrestrial network), the behavior of the (considered) user equipment can be defined in case that the user equipment is (currently) using the (or a) non-terrestrial mobile communication network and/or the (or a) non-terrestrial radio access technology. Furthermore, by means of using the further time interval-related information (also stored in the subscriber identity module entity) which is, e.g., applied (or, at least, might be applied) in case that the user equipment uses a terrestrial mobile communication network and/or a terrestrial radio access technology (or (according to further possible embodiments according to the present invention), which is at least not applied exclusively in case that the considered user equipment uses a non-terrestrial network), the behavior of the (considered) user equipment can be defined in such other cases.

Hence thereby, it is advantageously possible that user equipments are able to be configured such that an enhanced flexibility is possible to implement which is more adapted to specific device categories of user equipments, especially device categories of user equipments having comparatively low available energy budgets and/or having comparatively extended times of operation without charging.

According to a further preferred embodiment of the present invention, performing the network selection procedure (to select a higher priority mobile communication network and/or to select a higher priority radio access technology) in a manner applying the time interval-related information and/or the further time interval-related information, corresponds to
-- refraining from performing the network selection procedure in case that this is what is indicated by the time interval-related information,
   and/or
-- refraining from performing the network selection procedure in case that this is what is indicated by the further time interval-related information.

Thereby, it is advantageously possible to be able to implement the present invention in a comparatively easy and efficient manner: Of course, applying - in the second step of the inventive method - (i.e. configuring the user equipment in a manner such that it applies) the time interval-related information and/or the further time interval-related information means that the user equipment is performing the (periodic) network selection procedure according to what the time interval-related information (or its content or value) prescribes or defines, i.e. in case that the time interval-related information (or its content or value) is such that the corresponding (periodic) network selection procedure (i.e. the one performed based on applying the corresponding time interval-related information or the corresponding further time interval-related information) is switched off, the user equipment is configured such that it refrains from performing the network selection procedure in case that this is what is indicated by the time interval-related information or the further time interval-related information, respectively.

It is furthermore preferred according to the present invention that the subscriber identity module entity comprises at least one indicator information, the at least one indicator information indicating, or referring to, the higher priority mobile communication network and/or the higher priority radio access technology, or a plurality thereof, wherein the indicator information refers to a plurality higher priority mobile communication networks and/or a plurality of higher priority radio access technology using, as part of the indicator information, at least one piece of wildcard information or at least one piece of information corresponding to, or being used as, a wildcard information.

It is thereby advantageously possible, according to the present invention, to configure the user equipment such that the definition of what the (considered) user equipment should consider a higher priority mobile communication network and/or a higher priority radio access technology is able to be made more concise. Especially, it is advantageously possible, according to the present invention, to define the higher priority mobile communication network(s) and/or the higher priority radio access technology(technologies) more easily, and, also, to be able to refer to a higher number of such higher priority mobile communication networks and/or higher priority radio access technologies than it is possible to store individual items (each e.g. defining one single mobile communication network and/or radio access technology) as part of the subscriber identity module entity.

For example, there might be, on the subscriber identity module entity, sufficient space, i.e. memory (or, rather, memory attributed to or being usable for such definitions of mobile communication networks and/or radio access technologies), to store a certain number of different mobile communication networks and/or radio access technologies - e.g. 51 different individual mobile communication networks and/or radio access technologies. According to the present invention however, with the preferred embodiment according to which at least a part of the indicator information corresponds to at least one piece of wildcard information or at least one piece of information corresponding to, or being used as, a wildcard information, it might be possible to address (or to refer to) many more mobile communication networks (and/or radio access technologies) than that certain number (e.g. 51) - rather, it might be possible to refer to hundreds or even more (such as, e.g., dozens of hundreds) of different mobile communication networks (and/or radio access technologies).

According to still a further preferred embodiment of the present invention, the non-terrestrial mobile communication network is or corresponds to a non-terrestrial network part of the mobile communication network.

Thereby, it is advantageously possible to be able to implement the present invention in a comparatively easy and efficient manner: The mobile communication network to which the considered user equipment is currently connected (or with which it is registered) might comprise a terrestrial network part and a non-terrestrial network part; hence, in case the (considered) user equipment is connected to (or registered with) the non-terrestrial network part of the mobile communication network (and/or currently uses a radio access technology thereof), this non-terrestrial network part is considered the mobile communication network.

According to another preferred embodiment of the present invention, the user equipment corresponds to an internet-of-things user equipment and/or to a machine type communication user equipment, especially a narrow-band internet-of-things user equipment, NB-IoT-UE, or a long term evolution machine-type user equipment, LTE-M UE, or a new radio reduced capability user equipment or device, NR redcap UE or device.

Thereby, it is advantageously possible according to the present invention that a flexible and adaptive behavior of the user equipment is comparatively easy to be implemented.

Furthermore, the present invention relates to a user equipment for being used in or with a non-terrestrial mobile communication network and/or using a non-terrestrial radio access technology, wherein the user equipment is provided with a priority information regarding the mobile communication network and/or the radio access technology, wherein - in case that the priority information, regarding the mobile communication network used by the user equipment and/or regarding the radio access technology used by the user equipment, indicates a sufficiently low priority of the mobile communication network used by the user equipment and/or a sufficiently low priority of the radio access technology used by the user equipment - the user equipment is configured to perform a network selection procedure to select a higher priority mobile communication network and/or to select a higher priority radio access technology, wherein the user equipment comprises a subscriber identity module entity realizing the functionality of a subscriber identity module, wherein the subscriber identity module entity comprises a time interval-related information such that the time interval, to be applied by the user equipment to perform the network selection procedure for a higher prioritized mobile communication network and/or for a higher priority radio access technology, depends on the time interval-related information stored in the subscriber identity module entity,
wherein the user equipment is configured such that
-- the user equipment uses the non-terrestrial mobile communication network and/or the non-terrestrial radio access technology, and
-- performs the network selection procedure, to select a higher priority mobile communication network and/or to select a higher priority radio access technology, in a manner applying the time interval-related information, wherein the time interval-related information is exclusively applied in case that the user equipment uses
-- the non-terrestrial mobile communication network or a non-terrestrial mobile communication network,
   and/or
-- the non-terrestrial radio access technology or a non-terrestrial radio access technology.

It is thereby advantageously possible to realize the present invention using a corresponding user equipment.

Furthermore, the present invention relates to a system or to a mobile communication network for using a user equipment in or with a non-terrestrial mobile communication network and/or that uses a non-terrestrial radio access technology, wherein the user equipment is provided with a priority information regarding the mobile communication network and/or the radio access technology, wherein - in case that the priority information, regarding the mobile communication network used by the user equipment and/or regarding the radio access technology used by the user equipment, indicates a sufficiently low priority of the mobile communication network used by the user equipment and/or a sufficiently low priority of the radio access technology used by the user equipment - the user equipment is configured to perform a network selection procedure to select a higher priority mobile communication network and/or to select a higher priority radio access technology,
wherein the user equipment comprises a subscriber identity module entity realizing the functionality of a subscriber identity module, wherein the subscriber identity module entity comprises a time interval-related information such that the time interval, to be applied by the user equipment to perform the network selection procedure for a higher prioritized mobile communication network and/or for a higher priority radio access technology, depends on the time interval-related information stored in the subscriber identity module entity,
wherein the user equipment is configured such that
   -- the user equipment uses the non-terrestrial mobile communication network and/or the non-terrestrial radio access technology, and
   -- the user equipment performs the network selection procedure, to select a higher priority mobile communication network and/or to select a higher priority radio access technology, in a manner applying the time interval-related information, wherein the time interval-related information is exclusively applied in case that the user equipment uses
   -- the non-terrestrial mobile communication network or a non-terrestrial mobile communication network,
      and/or
   -- the non-terrestrial radio access technology or a non-terrestrial radio access technology.

Additionally, the present invention relates to a program comprising a computer readable program code which, when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

Still additionally, the present invention relates to a computer-readable medium comprising instructions which when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile communication network comprising a plurality of radio cells being served by a plurality of base station entities, and a plurality of user equipments being served by the mobile communication network; in the representation shown, the mobile communication network also comprises a non-terrestrial network part that comprises a plurality of satellites that, at least partly, provide the functionalities of base station entities being able to serve user equipments.
Figure 2 schematically illustrates a user equipment according to the present invention comprising a subscriber identity module entity.
Figures 3 and 4 schematically illustrate a subscriber identity module entity of a user equipment according to the present invention with schematically represented content of the subscriber identity module entity.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

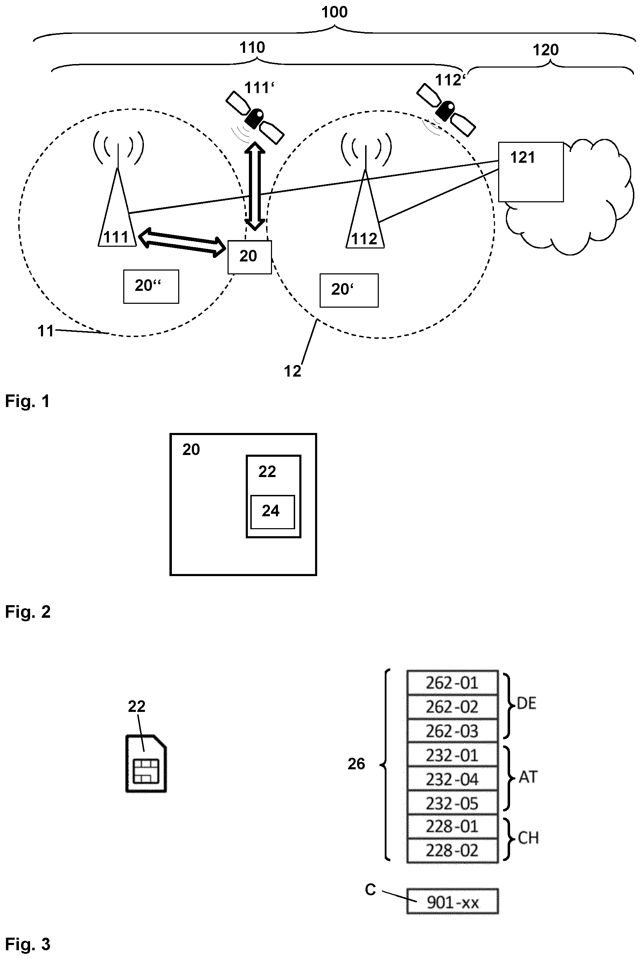

In Figure 1, a mobile communication network 100 is schematically shown. In the example, the mobile communication network 100 comprises an access network 110 and a core network 120. The mobile communication network 100 is preferably a cellular telecommunications network comprising typically a plurality of network cells, wherein two (terrestrial) radio cells of the mobile communication network 100 are represented in Figure 1 by means of reference signs 11 and 12: a first (terrestrial) radio cell 11, and a second (terrestrial) radio cell 12. The access network 110 comprises at least a first base station entity 111 serving the first radio cell 11, and a second base station entity 112, serving the second radio cell 12. A plurality of user equipments 20, 20', 20" are schematically depicted in Figure 1 as examples of user equipments in contact with, or registered to, the telecommunications network 100. The user equipments comprise a first user equipment 20, a second user equipment 20', and a third user equipment 20".

Furthermore, Figure 1 also schematically represents non-terrestrial network infrastructure, namely a first satellite 111' and a second satellite 112'. The first and second satellites 111', 112' serve to illustrate that either the mobile communication network 100 might also comprise a non-terrestrial network part (in which case the first and second satellite 111', 112' could be considered as being part of the (radio) access network 110 of the mobile communication network 100), or the first and second satellites 111', 112' might be part of another mobile communication network (i.e. besides the mobile communication network 100), i.e. the first and second satellites 111', 112' would, in this case, be part of the other mobile communication network, e.g. a 'purely' non-terrestrial network. Independently of which case applies, a considered user equipment - e.g. (first) user equipment 20 - might be able to be served either by a terrestrial base station entity 111, 112, or by a non-terrestrial base station entity 111', 112' (as the first and second satellites 111', 112' are, at least partly, providing functionalities of a base station entity, and are actually acting - at least from the perspective of the considered user equipment 20 - as base station entities (albeit non-terrestrial base station entities) of radio access network 110 (or of another network).

Furthermore, Figure 1 schematically shows a network node 121 of the core network 120 of the mobile communication network 100; the user equipments 20, 20', 20" might be connected to (and communicate with) - via the respective serving base station entity - network node 121 or to other network nodes (not specifically shown in Figure 1) of the core network 120 of the mobile communication network 100.

According to the present invention, a method, a user equipment 20 and a system or telecommunications network for an enhanced power consumption management of a user equipment 20 using a mobile communication network 100 and a radio access technology is proposed.

According to the proposed method, user equipment and system or mobile communication network, the user equipment 20 uses the mobile communication network 100 and a radio access technology to access the mobile communication network 100. Typically, each user equipment 20 is associated with a home mobile communication network, or home public land mobile network, HPLMN. Typically, user equipments are able to also connect to other mobile communication networks (than the home mobile communication network) that are called visited mobile communication networks (or visited public land mobile networks, VPLMN). However, user equipments are typically incited not to use arbitrary mobile communication networks but to switch either to the home mobile communication network itself (if it is available or if this is possible) or at least to one or a plurality of preferred or prioritized mobile communication network(s). This is stipulated, e.g., in point 4.4.3.3 of 3GPP standardization document ETSI TS 23.122 V17.7.1 (2022-06). Hence, the user equipments (such as (the first) user equipment 20) are provided with a priority information regarding all or at least a plurality of mobile communication networks these user equipment are likely to use or to connect to. In case that the priority information related to the mobile communication network 100 the user equipment 20 is currently using (camping on) is sufficiently low (i.e. typically if the condition is met that this priority information is lower than a predefined threshold value or priority threshold), the user equipment 20 is incited to perform a network selection procedure in order to search for other mobile communication networks having an increased value of the associated priority information (i.e. correspond to higher priority mobile communication networks). However, the network selection procedure is typically not performed anytime but as an additional condition that has to be met (in order to trigger a network selection procedure), a time interval has to have elapsed.

Hence, in the context of the present invention, this means that the user equipment 20 currently uses the mobile communication network 100, and the mobile communication network 100 does not correspond to the home mobile communication network of the user equipment 20, and the further assumption is that the priority information associated (within the user equipment 20, especially within the subscriber identity module entity thereof) to the mobile communication network 100 (or regarding the mobile communication network 100) is sufficiently low as to trigger the network selection procedure in case that the time interval has elapsed.

In Figure 2, a user equipment 20 according to the present invention is schematically shown. The user equipment 20 comprises an entity 22 realizing the functionality of a subscriber identity module (or subscriber identity module entity 22). In many cases the subscriber identity module entity 22 might be a (removable and/or hardware) subscriber identity module (or a so-called subscriber identity module card, SIM card). However, the subscriber identity module entity 22 could also be a non-removable module (sometimes also called embedded subscriber identity module or eSIM).

The subscriber identity module entity 22 comprises data - e.g. in the Elementary Field of the SIM card - that correspond to time interval related information 24 such that the time interval, to be applied by the user equipment 20 to perform the network selection procedure for a higher prioritized mobile communication network, depends on the time interval related information 24 stored in the subscriber identity module entity 22. Typically, the information content of the time interval related information 24 corresponds to a predetermined number of positive integer values (or to a plurality of numbers of integer values), wherein the dependency of the time interval, to be applied by the user equipment 20, on the information content of the time interval related information 24 might correspond to different possibilities.

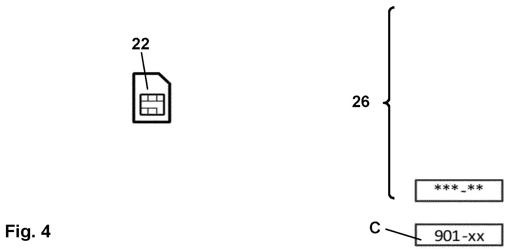

Figures 3 and 4 schematically illustrate a subscriber identity module entity 22 of a user equipment 20 according to the present invention with schematically represented contents thereof (one or a plurality of pieces of indicator information 26). The at least one (piece of) indicator information 26 indicates, or refers to, the higher priority mobile communication network and/or the higher priority radio access technology, or a plurality thereof to which the considered user equipment 20 shall switch (or which it shall use) upon performing the (periodic) network selection procedure. The user equipment 20 is configured to perform (or refrain from performing) this (periodic) network selection procedure (in order to select such a higher priority mobile communication network and/or to select such a higher priority radio access technology) if the corresponding conditions are fulfilled, i.e. if the currently used mobile communication network 100 and/or radio access technology is sufficiently lowly prioritized, and the timer of (or representing) the time interval corresponding to the time interval-related information 24 has elapsed (i.e. in case the time interval-related information 24 indicates so, the user equipment 20 is configured such as to refrain from performing the network selection procedure in case that this is what is indicated by the time interval-related information 24).

According to the present invention, especially the case or situation is considered where the mobile communication network 100 (shown in Figure 1) is a non-terrestrial network, i.e. a non-terrestrial mobile communication network 100 (either with also a terrestrial network part (as shown in Figure 1) or without - i.e. not represented in the Figures). The considered user equipment 20 is used in or with such a non-terrestrial mobile communication network 100 (i.e. the user equipment 20 uses the non-terrestrial radio access technology), and the user equipment 20 is provided with a priority information (or indicator information 26) regarding the mobile communication network 100 and/or the radio access technology, wherein - in case that the priority information (or indicator information 26) indicates a sufficiently low priority of the mobile communication network 100 currently used by the user equipment 20 and/or a sufficiently low priority of the radio access technology currently used by the user equipment 20 - the user equipment 20 is configured to perform a network selection procedure to select a higher priority mobile communication network and/or to select a higher priority radio access technology.

This is schematically shown in Figure 3: The currently used mobile communication network is indicated by means of reference sign "C" (indicating that the currently used mobile communication network uses a shared mobile country code, e.g. having the value "901"). The priority information or indicator information 26 refer to higher prioritized mobile communication networks in different countries (like - just as illustrative examples - "DE" for Germany, "AT" for Austria, and "CH" for Switzerland) by means of explicitly stating - as part of the priority information or indicator information 26 - the corresponding mobile network codes ("262-01", "262-02", "262-03" for mobile communication networks in Germany, "232-01", "232-04", "232-05" for mobile communication networks in Austria, and "228-01", "228-02" for mobile communication networks in Switzerland); these mobile network codes comprise, respectively, their mobile country codes.

In case that the considered user equipment 20 is used in or with non-terrestrial mobile communication network 100 (using mobile country code 901 as shown in Figure 3), the user equipment 20 performs the network selection procedure (i.e. to select one of the afore-mentioned higher priority mobile communication networks) by means of applying the time interval-related 24 information (and upon the respective time interval having elapsed); this is due to the time interval-related information 24 being exclusively applied in case that the user equipment 20 uses the non-terrestrial mobile communication network 100 (or another non-terrestrial mobile communication network), and even though a further time interval-related information (referring to the user equipment 20 using a terrestrial mobile communication network and/or a terrestrial radio access technology) might indicate that the user equipment 20 should refrain from performing the (periodic) network selection procedure).

In such a situation, in order not to be required to indicate each and every higher priority mobile communication network explicitly and individually as part of the priority information or indicator information 26, Figure 4 shows an example where the subscriber identity module entity 22 comprises at least one indicator information 26 indicating (or referring to) the higher priority mobile communication network and/or the higher priority radio access technology using, as part of the indicator information 26, at least one piece of wildcard information or at least one piece of information corresponding to, or being used as, a wildcard information - this corresponds to the indication "***-**" as shown in Figure 4 (meaning "any network"; and in this case "any network" has a higher priority than a mobile country code = 901) but this could also correspond, e.g., to the indication "2**-**" (meaning "a (terrestrial) network in Europe"; not shown in Figure 4) or to the indication "***-** RAT = TN" (meaning "any network having (or using) as radio access technology a terrestrial access" (this is especially relevant in case that the mobile country code used by the non-terrestrial network is different from 901); likewise not shown in Figure 4).

According to the present invention, it is especially preferred that a user equipment 20 is configured such that its subscriber identity module entity 22 comprises - besides the time interval-related information 24 - the further time interval-related information such that the time interval, to be applied by the user equipment 20 to perform the network selection procedure for a higher prioritized mobile communication network and/or for a higher priority radio access technology in case that the user equipment 20 currently uses a terrestrial mobile communication network and/or a terrestrial radio access technology, depends on the further time interval-related information (and, of course, such that the time interval, to be applied by the user equipment 20 to perform the network selection procedure for a higher prioritized mobile communication network and/or for a higher priority radio access technology in case that the user equipment 20 currently uses a non-terrestrial mobile communication network and/or a non-terrestrial radio access technology, depends on the time interval-related information (which is exclusively applied in case that the user equipment (20) uses a non-terrestrial mobile communication network or non-terrestrial radio access technology).

Especially, the time interval-related information 24 that is exclusively applied in case that the user equipment 20 uses a non-terrestrial mobile communication network or a non-terrestrial radio access technology (especially for the use with internet-of-things user equipments), is able to be realized by means of defining a specific entry (e.g. "EFHPPLMN-NTN (Higher Priority PLMN search period while Roaming on NTT)") for the situation of the considered user equipment 20 being served by a non-terrestrial network (or using non-terrestrial network radio access technology). Such an enty (e.g. as part of 3GPP Ts 31.102) might read according to the following lines:
EFHPPLMN-NTN (Higher Priority PLMN search period while roaming on NTN) This EF contains the interval of time between searches for a higher priority PLMN while roaming on NTN (see 3GPP TS 23.122 [31]).

| | | | | | |
|---|---|---|---|---|---|
| Identifier: '6F3?' | | Structure: transparent | | | Mandatory |
| SFI: '12' | | | | | |
| File size: 1 byte | | Update activity: low | | | |
| Access Conditions: | | | | | |
| | READ | | PIN | | |
| | UPDATE | | ADM | | |
| | DEACTIVATE | | ADM | | |
| | ACTIVATE | | ADM | | |

| Bytes | Description | | M/O | Length | |
|---|---|---|---|---|---|
| 1 | Time interval | | M | 1 byte | |

## Claims

1. Method for using a user equipment (20) in a non-terrestrial mobile communication network (100) that uses a non-terrestrial radio access technology, wherein the user equipment (20) is provided with a priority information regarding the mobile communication network (100) and the radio access technology, wherein - in case that the priority information, regarding the mobile communication network (100) used by the user equipment (20) and regarding the radio access technology used by the user equipment (20), indicates a sufficiently low priority of the mobile communication network (100) used by the user equipment (20) and/or a sufficiently low priority of the radio access technology used by the user equipment (20) - the user equipment (20) is configured to perform a network selection procedure to select a higher priority mobile communication network and/or to select a higher priority radio access technology,
wherein the user equipment (20) comprises a subscriber identity module entity (22), wherein the subscriber identity module entity (22) comprises a time interval-related information (24) such that a time interval, to be applied by the user equipment (20) to perform the network selection procedure for a higher prioritized mobile communication network and/or for a higher priority radio access technology, depends on the time interval-related information (24) stored in the subscriber identity module entity (22),
wherein the method comprises the following steps:
-- in a first step, the user equipment (20) uses the non-terrestrial mobile communication network (100) and the non-terrestrial radio access technology,
-- in a second step, the user equipment (20) performs the network selection procedure, to select a higher priority mobile communication network and/or to select a higher priority radio access technology, by applying the time interval-related information (24),
**characterized in that** the time interval-related information (24) is exclusively applied in case that the user equipment (20) uses
the non-terrestrial mobile communication network (100).

2. Method according to claim 1, wherein the subscriber identity module entity (22) comprises a further time interval-related information such that the time interval, to be applied by the user equipment (20) to perform the network selection procedure for a higher prioritized mobile communication network and/or for a higher priority radio access technology in case that the user equipment (20) uses a terrestrial mobile communication network and/or a terrestrial radio access technology, depends on the further time interval-related information stored in the subscriber identity module entity (22).

3. Method according to claim 1, wherein performing the network selection procedure, to select a higher priority mobile communication network and/or to select a higher priority radio access technology, by applying the time interval-related information (24) and/or the further time interval-related information, corresponds to
-- refraining from performing the network selection procedure in case that this is what is indicated by the time interval-related information (24),
and/or
-- refraining from performing the network selection procedure in case that this is what is indicated by the further time interval-related information.

4. Method according to one of the preceding claims, wherein the subscriber identity module entity (22) comprises at least one indicator information, the at least one indicator information indicating, or referring to, the higher priority mobile communication network and/or the higher priority radio access technology, or a plurality thereof, wherein the indicator information refers to a plurality higher priority mobile communication networks and/or a plurality of higher priority radio access technology using, as part of the indicator information, at least one piece of wildcard information or at least one piece of information corresponding to, or being used as, a wildcard information.

5. Method according to one of the preceding claims, wherein the non-terrestrial mobile communication network (100) is or corresponds to a non-terrestrial network part of the mobile communication network (100).

6. Method according to one of the preceding claims, wherein the user equipment (20) corresponds to an internet-of-things user equipment and/or to a machine type communication user equipment, especially a narrow-band internet-of-things user equipment, NB-IoT-UE, or a long term evolution machine-type user equipment, LTE-M UE, or a new radio reduced capability user equipment or device, NR redcap UE or device.
wherein especially the user equipment (20) realizes an enhanced power consumption management.

7. User equipment (20) configured to perform a method according to one of claims 1 to 6.

8. System comprising a non-terrestrial mobile communication network (100) for using a user equipment (20) in the non-terrestrial mobile communication network (100), wherein the system comprises the user equipment according to claim 7.

9. Program comprising a computer readable program code which, when executed on a user equipment (20) causes the user equipment (20) to perform a method according one of claims 1 to 6.

10. Computer program product for an enhanced power consumption management of a user equipment (20) using a mobile communication network (100) and a radio access technology, the computer program product comprising a computer program stored on a storage medium, the computer program comprising program code which, when executed on a user equipment (20) causes the user equipment (20) to perform a method according one of claims 1 to 6.

## Patentansprüche

1. Verfahren zur Verwendung eines Benutzergeräts (20) in einem nicht-terrestrischen Mobilkommunikationsnetz (100), das eine nicht-terrestrische Funkzugangstechnologie verwendet, wobei das Benutzergerät (20) mit einer Prioritätsinformation bezüglich des Mobilkommunikationsnetzes (100) und der Funkzugangstechnologie versehen ist, wobei -- in dem Fall, dass die Prioritätsinformation bezüglich des vom Benutzergerät (20) verwendeten Mobilkommunikationsnetzes (100) und bezüglich der vom Benutzergerät (20) verwendeten Funkzugangstechnologie eine ausreichend niedrige Priorität des vom Benutzergerät (20) verwendeten Mobilkommunikationsnetzes (100) und/oder eine ausreichend niedrige Priorität der vom Benutzergerät (20) verwendeten Funkzugangstechnologie anzeigt -- das Benutzergerät (20) konfiguriert ist, ein Netzwahlverfahren durchzuführen, um ein Mobilkommunikationsnetz mit höherer Priorität auszuwählen und/oder um eine Funkzugangstechnologie mit höherer Priorität auszuwählen, wobei das Benutzergerät (20) eine Teilnehmeridentitätsmodul-Entität (22) umfasst, wobei die Teilnehmeridentitätsmodul-Entität (22) eine zeitintervallbezogene Information (24) umfasst, so dass ein Zeitintervall, das vom Benutzergerät (20) anzuwenden ist, um das Netzwahlverfahren für ein Mobilkommunikationsnetz mit höherer Priorität und/oder für eine Funkzugangstechnologie mit höherer Priorität durchzuführen, von der zeitintervallbezogenen Information (24) abhängt, die in der Teilnehmeridentitätsmodul-Entität (22) gespeichert ist, wobei das Verfahren die folgenden Schritte umfasst: -- in einem ersten Schritt verwendet das Benutzergerät (20) das nicht-terrestrische Mobilkommunikationsnetz (100) und die nicht-terrestrische Funkzugangstechnologie, -- in einem zweiten Schritt führt das Benutzergerät (20) das Netzwahlverfahren durch, um ein Mobilkommunikationsnetz mit höherer Priorität auszuwählen und/oder um eine Funkzugangstechnologie mit höherer Priorität auszuwählen, indem die zeitintervallbezogene Information (24) angewendet wird, **dadurch gekennzeichnet, dass** die zeitintervallbezogene Information (24) ausschließlich in dem Fall angewendet wird, dass das Benutzergerät (20) das nicht-terrestrische Mobilkommunikationsnetz (100) verwendet.

2. Verfahren nach Anspruch 1, wobei die Teilnehmeridentitätsmodul-Entität (22) eine weitere zeitintervallbezogene Information umfasst, so dass das Zeitintervall, das vom Benutzergerät (20) anzuwenden ist, um das Netzwahlverfahren für ein Mobilkommunikationsnetz mit höherer Priorität und/oder für eine Funkzugangstechnologie mit höherer Priorität in dem Fall durchzuführen, dass das Benutzergerät (20) ein terrestrisches Mobilkommunikationsnetz und/oder eine terrestrische Funkzugangstechnologie verwendet, von der weiteren zeitintervallbezogenen Information abhängt, die in der Teilnehmeridentitätsmodul-Entität (22) gespeichert ist.

3. Verfahren nach Anspruch 1, wobei das Durchführen des Netzwahlverfahrens, um ein Mobilkommunikationsnetz mit höherer Priorität auszuwählen und/oder um eine Funkzugangstechnologie mit höherer Priorität auszuwählen, indem die zeitintervallbezogene Information (24) und/oder die weitere zeitintervallbezogene Information angewendet wird, entspricht -- dem Unterlassen der Durchführung des Netzwahlverfahrens in dem Fall, dass dies das ist, was durch die zeitintervallbezogene Information (24) angezeigt wird, und/oder -- dem Unterlassen der Durchführung des Netzwahlverfahrens in dem Fall, dass dies das ist, was durch die weitere zeitintervallbezogene Information angezeigt wird.

4. Verfahren nach einem der vorhergehenden Ansprüche, wobei die Teilnehmeridentitätsmodul-Entität (22) mindestens eine Indikatorinformation umfasst, wobei die mindestens eine Indikatorinformation das Mobilkommunikationsnetz mit höherer Priorität und/oder die Funkzugangstechnologie mit höherer Priorität oder eine Vielzahl davon anzeigt oder sich darauf bezieht, wobei die Indikatorinformation sich auf eine Vielzahl von Mobilkommunikationsnetzen mit höherer Priorität und/oder eine Vielzahl von Funkzugangstechnologien mit höherer Priorität bezieht, indem sie als Teil der Indikatorinformation mindestens eine Platzhalterinformation oder mindestens eine Information verwendet, die einer Platzhalterinformation entspricht oder als Platzhalterinformation verwendet wird.

5. Verfahren nach einem der vorhergehenden Ansprüche, wobei das nicht-terrestrische Mobilkommunikationsnetz (100) einem nicht-terrestrischen Netzteil des Mobilkommunikationsnetzes (100) ist oder entspricht.

6. Verfahren nach einem der vorhergehenden Ansprüche, wobei das Benutzergerät (20) einem Internet-der-Dinge-Benutzergerät und/oder einem Maschinentypkommunikations-Benutzergerät entspricht, insbesondere einem Schmalband-Internet-der-Dinge-Benutzergerät, NB-IoT-UE, oder einem Long-Term-Evolution-Maschinentyp-Benutzergerät, LTE-M UE, oder einem New-Radio-Benutzergerät mit reduzierter Leistungsfähigkeit oder Gerät, NR redcap UE oder Gerät, wobei insbesondere das Benutzergerät (20) eine verbesserte Stromverbrauchsverwaltung realisiert.

7. Benutzergerät (20), das konfiguriert ist, ein Verfahren nach einem der Ansprüche 1 bis 6 durchzuführen.

8. System, umfassend ein nicht-terrestrisches Mobilkommunikationsnetz (100) zur Verwendung eines Benutzergeräts (20) in dem nicht-terrestrischen Mobilkommunikationsnetz (100), wobei das System das Benutzergerät nach Anspruch 7 umfasst.

9. Programm, umfassend einen computerlesbaren Programmcode, der, wenn er auf einem Benutzergerät (20) ausgeführt wird, das Benutzergerät (20) veranlasst, ein Verfahren nach einem der Ansprüche 1 bis 6 durchzuführen.

10. Computerprogrammprodukt für eine verbesserte Stromverbrauchsverwaltung eines Benutzergeräts (20), das ein Mobilkommunikationsnetz (100) und eine Funkzugangstechnologie verwendet, wobei das Computerprogrammprodukt ein Computerprogramm umfasst, das auf einem Speichermedium gespeichert ist, wobei das Computerprogramm einen Programmcode umfasst, der, wenn er auf einem Benutzergerät (20) ausgeführt wird, das Benutzergerät (20) veranlasst, ein Verfahren nach einem der Ansprüche 1 bis 6 durchzuführen.

## Revendications

1. Procédé d'utilisation d'un équipement utilisateur (20) dans un réseau de communication mobile non terrestre (100) qui utilise une technologie d'accès radio non terrestre, dans lequel l'équipement utilisateur (20) est pourvu d'une information de priorité concernant le réseau de communication mobile (100) et la technologie d'accès radio, dans lequel **--** dans le cas où l'information de priorité, concernant le réseau de communication mobile (100) utilisé par l'équipement utilisateur (20) et concernant la technologie d'accès radio utilisée par l'équipement utilisateur (20), indique une priorité suffisamment basse du réseau de communication mobile (100) utilisé par l'équipement utilisateur (20) et/ou une priorité suffisamment basse de la technologie d'accès radio utilisée par l'équipement utilisateur (20) **--** l'équipement utilisateur (20) est configuré pour effectuer une procédure de sélection de réseau pour sélectionner un réseau de communication mobile de priorité supérieure et/ou pour sélectionner une technologie d'accès radio de priorité supérieure, dans lequel l'équipement utilisateur (20) comprend une entité de module d'identité d'abonné (22), dans lequel l'entité de module d'identité d'abonné (22) comprend une information relative à l'intervalle de temps (24) de sorte qu'un intervalle de temps, à appliquer par l'équipement utilisateur (20) pour effectuer la procédure de sélection de réseau pour un réseau de communication mobile de priorité supérieure et/ou pour une technologie d'accès radio de priorité supérieure, dépend de l'information relative à l'intervalle de temps (24) stockée dans l'entité de module d'identité d'abonné (22), dans lequel le procédé comprend les étapes suivantes : -- dans une première étape, l'équipement utilisateur (20) utilise le réseau de communication mobile non terrestre (100) et la technologie d'accès radio non terrestre, **--** dans une deuxième étape, l'équipement utilisateur (20) effectue la procédure de sélection de réseau, pour sélectionner un réseau de communication mobile de priorité supérieure et/ou pour sélectionner une technologie d'accès radio de priorité supérieure, en appliquant l'information relative à l'intervalle de temps (24), **caractérisé en ce que** l'information relative à l'intervalle de temps (24) est exclusivement appliquée dans le cas où l'équipement utilisateur (20) utilise le réseau de communication mobile non terrestre (100).

2. Procédé selon la revendication 1, dans lequel l'entité de module d'identité d'abonné (22) comprend une autre information relative à l'intervalle de temps de sorte que l'intervalle de temps, à appliquer par l'équipement utilisateur (20) pour effectuer la procédure de sélection de réseau pour un réseau de communication mobile de priorité supérieure et/ou pour une technologie d'accès radio de priorité supérieure dans le cas où l'équipement utilisateur (20) utilise un réseau de communication mobile terrestre et/ou une technologie d'accès radio terrestre, dépend de l'autre information relative à l'intervalle de temps stockée dans l'entité de module d'identité d'abonné (22).

3. Procédé selon la revendication 1, dans lequel l'exécution de la procédure de sélection de réseau, pour sélectionner un réseau de communication mobile de priorité supérieure et/ou pour sélectionner une technologie d'accès radio de priorité supérieure, en appliquant l'information relative à l'intervalle de temps (24) et/ou l'autre information relative à l'intervalle de temps, correspond à -- s'abstenir d'effectuer la procédure de sélection de réseau dans le cas où c'est ce qui est indiqué par l'information relative à l'intervalle de temps (24), et/ou -- s'abstenir d'effectuer la procédure de sélection de réseau dans le cas où c'est ce qui est indiqué par l'autre information relative à l'intervalle de temps.

4. Procédé selon l'une des revendications précédentes, dans lequel l'entité de module d'identité d'abonné (22) comprend au moins une information d'indicateur, ladite au moins une information d'indicateur indiquant, ou se référant à, le réseau de communication mobile de priorité supérieure et/ou la technologie d'accès radio de priorité supérieure, ou une pluralité de ceux-ci, dans lequel l'information d'indicateur se réfère à une pluralité de réseaux de communication mobile de priorité supérieure et/ou une pluralité de technologies d'accès radio de priorité supérieure en utilisant, comme partie de l'information d'indicateur, au moins une information générique ou au moins une information correspondant à, ou étant utilisée comme, une information générique.

5. Procédé selon l'une des revendications précédentes, dans lequel le réseau de communication mobile non terrestre (100) est ou correspond à une partie de réseau non terrestre du réseau de communication mobile (100).

6. Procédé selon l'une des revendications précédentes, dans lequel l'équipement utilisateur (20) correspond à un équipement utilisateur internet des objets et/ou à un équipement utilisateur de communication de type machine, en particulier un équipement utilisateur internet des objets à bande étroite, NB-loT-UE, ou un équipement utilisateur de type machine à évolution à long terme, LTE-M UE, ou un équipement utilisateur nouvelle radio à capacité réduite ou dispositif, NR redcap UE ou dispositif, dans lequel en particulier l'équipement utilisateur (20) réalise une gestion de la consommation d'énergie améliorée.

7. Équipement utilisateur (20) configuré pour effectuer un procédé selon l'une des revendications 1 à 6.

8. Système comprenant un réseau de communication mobile non terrestre (100) pour utiliser un équipement utilisateur (20) dans le réseau de communication mobile non terrestre (100), dans lequel le système comprend l'équipement utilisateur selon la revendication 7.

9. Programme comprenant un code de programme lisible par ordinateur qui, lorsqu'il est exécuté sur un équipement utilisateur (20), amène l'équipement utilisateur (20) à effectuer un procédé selon l'une des revendications 1 à 6.

10. Produit de programme informatique pour une gestion de la consommation d'énergie améliorée d'un équipement utilisateur (20) utilisant un réseau de communication mobile (100) et une technologie d'accès radio, le produit de programme informatique comprenant un programme informatique stocké sur un support de stockage, le programme informatique comprenant un code de programme qui, lorsqu'il est exécuté sur un équipement utilisateur (20), amène l'équipement utilisateur (20) à effectuer un procédé selon l'une des revendications 1 à 6.
